# EUROPÄISCHE PATENTSCHRIFT

(11) **EP 1 366 199 B1**
(45) Veröffentlichungstag und Bekanntmachung des Hinweises auf die Patenterteilung: **01.03.2006**
(21) Anmeldenummer: 02729775.3
(22) Anmeldetag: 07.03.2002
(51) Int. Cl.: C21D 9/10, C21D 9/08, B29C 47/66

(54) **HERSTELLUNG EINES ZYLINDERGEHÄUSES EINES DOPPELSCHNECKENEXTRUDERS**
PRODUCTION OF A CYLINDRICAL HOUSING FOR A DOUBLE SCREW EXTRUDER
PRODUCTION D'UN BOITIER CYLINDRIQUE DESTINE A UNE EXTRUDEUSE A DEUX VIS

(30) Priorität: 08.03.2001 DE 10112295
(43) Veröffentlichungstag der Anmeldung: 03.12.2003
(73) Patentinhaber: Berstorff GmbH, 30625 Hannover (DE)
(72) Erfinder: BEHLING, Michael, 31787 Hameln (DE); WESLING, Volker, 38678 Clausthal-Zellerfeld (DE); MOTZKAU, Uwe, 31275 Lehrte (DE)
(74) Vertreter: Meissner, Peter E.
(86) Internationale Anmeldenummer: PCT/DE2002/000876
(87) Internationale Veröffentlichungsnummer: WO 2002/070754

(56) Entgegenhaltungen:
- DD-A- 283 159
- DE-C- 19 915 264
- PATENT ABSTRACTS OF JAPAN vol. 007, no. 066 (C-157), 18. März 1983 (1983-03-18) & JP 58 001018 A (DAIICHI KOUSHIYUUHA HONSHIYA KK), 6. Januar 1983 (1983-01-06)

## Beschreibung

Die Erfindung betrifft ein Verfahren zur Herstellung eines Zylindergehäuses eines Doppelschneckenextruders, dessen Schnecken miteinander kämmen, mit verschleißfester Innenoberfläche aus einem Stahlblock durch Einbringung zweier durchgehender und sich teilweise überlappender Bohrungen (Brillenbohrung) in den Stahlblock und anschließendes Härten der Innenoberfläche der Brillenbohrung sowie eine Vorrichtung zum Härten der Innenoberfläche der Brillenbohrung.

Doppelschneckenextruder mit dicht kämmenden Schnecken weisen aus axialen Teilabschnitten zusammengesetzte Zylindergehäuse auf, die eine durchgehende Brillenbohrung besitzen, in denen sich die jeweiligen beiden Extruderschnecken mit geringem Abstand zur Innenoberfläche drehen. Die Innenoberfläche der Zylinderbohrung unterliegt dabei einem abrasiven Verschleiß, der im Wesentlichen zwei Ursachen hat. Die eine Ursache ist in der Verarbeitung von Einsatzmaterialien mit aggressiven Eigenschaften, z.B. Kunststoffe mit abrasiv wirkenden Füllstoffen, zu sehen. Zum anderen kann es durch die während der Verarbeitung im Inneren des Zylinders auftretenden Druckverhältnisse zu radialen Auslenkungen der Schneckenwelle und demzufolge zu gleitenden Berührungen zwischen der Außenoberfläche der Schnecke und der Innenoberfläche des Zylindergehäuses kommen. Aus diesem Grunde werden nach Möglichkeit Zylindergehäuse verwendet, die aus einem Stahlblock hergestellt sind, in den die beiden sich teilweise überlappenden Bohrungen für die beiden Schnecken eingebracht werden und bei denen anschließend die Innenoberfläche gehärtet wird. Dies erfolgt üblicherweise dadurch, dass das mechanisch bearbeitete Werkstück in einen Härteofen eingesetzt, auf Härtetemperatur gebracht und anschließend abgeschreckt wird. Dabei wird eine Durchhärtung des Werkstücks erzielt, die im Regetfall aber nicht erwünscht ist. Zum einen gilt dies für die Flansche der Abschnitte des Zylindergehäuses, mit denen diese untereinander zu einem zusammenhängenden Gehäuse verbunden werden. Zum anderen gilt dies für die beiden Zwickelbereiche der Brillenbohrung des Zylindergehäuses, d.h. für die Gehäusebereiche in der Nähe der Überlappungszone der beiden durch das Gehäuse verlaufenden Bohrungen. An diesen Stellen ist es nämlich erwünscht, dass das Gehäuse zur Vermeidung von Brüchen möglichst gute Zähigkeitseigenschaften aufweist, die aber durch eine Durchhärtung regelmäßig verloren gehen. Hinzu kommt, dass die Kosten einer solchen Härtebehandlung relativ hoch sind, weil diese in erster Linie von der Höhe des Gewichts der Werkstücke abhängt und ein Gehäuseabschnitt für einen Doppelschneckenextruder wegen der großen erforderlichen Wanddicken sehr schwer ist.

Es ist bekannt, an Werkstücken durch eine Einsatzhärtung die Aufhärtung gezielt auf den Oberflächenbereich des jeweiligen Werkstücks zu beschränken, so dass das Werkstück im überwiegenden Teil seiner Masse im Wesentlichen die ursprünglich gegebenen guten Zähigkeitseigenschaften behält. Hierzu wird das aus kohlenstoffarmem Stahl gefertigte Werkstück in einen Ofen eingesetzt, in dem eine kohlenstoffreiche Atmosphäre aufrecht erhalten wird, so dass durch Diffusion des Kohlenstoffs in den Stahl eine Aufkohlung in einem solchen Maße stattfindet, dass durch anschließende Kühlung dann der gewünschte Härteeffekt erzielt wird. In ähnlicher Weise kann durch gezieltes Eindiffundieren von Stickstoff in den Stahl ein Nitrierhärten im Oberflächenbereich durchgeführt werden. Wegen der erforderlichen langen Glühzeiten sind solche Verfahren jedoch besonders kostenaufwendig.

Es ist aber auch grundsätzlich bekannt, ein Oberflächenhärten dadurch auszuführen, dass man einen an sich härtbaren Stahl nur an der Oberfläche, d.h. bis zu einer begrenzten Eindringtiefe erwärmt und anschließend abschreckt. Die Erwärmung kann durch Flammen oder auch durch induktives Erwärmen erzielt werden. Bei letzterem werden durch einen Induktor im zu behandelnden Werkstück elektrische Wirbeiströme induziert, die insbesondere infolge der Ummagnetisierung des Werkstücks zu einer Erwärmung führen.

Grundsätzlich lässt sich eine induktive Erwärmung in gleichmäßiger Form, d.h. mit gleichbleibender Eindringtiefe ohne große Probleme an Werkstücken mit gleichmäßiger Kontur durchführen. So wird etwa die induktive Erwärmung besonders erfolgreich praktiziert bei der Aufheizung von Stahlrohren mit kreisrundem Querschnitt. Bei Zylindergehäusen für einen Doppelschneckenextruder würde allerdings ein induktives Erwärmen mittels eines in entsprechender Weise wie der Gehäusequerschnitt geformten Induktors zu sehr ungleichmäßig starken Erwärmungen und Eindringtiefen führen. Die Zwickelbereiche würden nämlich mit besonders hoher Wärmeenergie beaufschlagt werden, da der Energieeintrag dort gleichsam von beiden Zylinderbohrungen aus erfolgen würde. Im Zwickelbereich würde also bei der anschließenden Abkühlung unter Aufhärtungsbedingungen praktisch eine Durchhärtung stattfinden. Diese hätte zur Folge, dass diese Bereiche besonders bruchempfindlich werden würden. Aus diesem Grunde wird eine solche Aufhärtung durch induktives Härten bisher nicht praktiziert.

Aufgabe der vorliegenden Erfindung ist es, ein Verfahren der gattungsgemäßen Art dahingehend weiterzubilden, dass der zeitliche und kostenmäßige Aufwand für die Erzielung einer Aufhärtung der Innenoberfläche eines Zylindergehäuses für einen Doppelschneckenextruder möglichst gering ist, wobei die Eindringtiefe der Härtung begrenzt und möglichst gleich über den Umfang der Brillenbohrung sein soll. Femer soll eine Vorrichtung zur Durchführung einer solchen Härtebehandlung angegeben werden.

Gelöst wird diese Aufgabe hinsichtlich des Verfahrens mit den im Patentanspruch 1 angegebenen Merkmalen. Durch die Merkmale der Unteransprüche 2 - 6 lässt sich dieses Verfahren in vorteilhafter Weise weiterbilden. Eine erfindungsgemäße Vorrichtung weist die im Patentanspruch 6 angegebenen Merkmale auf. Aus den Unteransprüchen 8-11 ergeben sich vorteilhafte Weiterbildungen dieser Vorrichtung.

Die Erfindung sieht vor, dass nach Einbringung der Brillenbohrung in den für die Herstellung eines Zylindergehäuses bzw. -gehäuseabschnitts eingesetzten Stahlblock die Härtung der Innenoberfläche der Brillenbohrung durch Induktives Härten vorgenommen wird. Dabei wird die Eindringtiefe im Wesentlichen auf einem gleichbleibenden Wert gehalten, indem ein elektrischer Induktor verwendet wird, der eine der Innenkontur der Brillenbohrung annähernd entsprechende verkleinerte Form aufweist und von einem Ende der Brillenbohrung bis zu deren anderem Ende durch diese hindurchgeführt wird. Dieser Induktor ist erfindungsgemäß darauf ausgelegt, dass im Nahbereich der beiden Zwickel der Brillenbohrung bezogen auf den zugeordneten Längenabschnitt am Umfang des Induktors jeweils deutlich weniger Energie zur Erwärmung der Innenoberfläche der Brillenbohrung abgegeben wird als in den von den Zwickeln entfernteren Bereichen der Innenkontur. Das hat zur Folge, dass die einzelnen Volumenelemente im Bereich der Zwickel, die sowohl in der Nähe der einen wie auch der anderen Gehäusebohrung liegen und daher einen Wärmeeintrag über die Innenoberfläche beider Bohrungen erfahren, insgesamt weniger erwärmt werden, als wenn bezogen auf die Innenoberfläche der Gehäusebohrungen überall ein gleicher Wärmeenergieeintrag (spezifischer Wärmeenergieeintrag) erfolgt. Der spezifische Wärmeenergieeintrag kann so dosiert werden, dass im Zwickelbereich zumindest annähernd in der Materialzone, die jeweils nahe an der Innenoberfläche liegt und zur Aufhärtung vorgesehen ist, eine etwa gleich starke Erwärmung erfolgt wie in den weiter von den beiden Zwickelbereichen entfernten Oberflächenbereichen. Auf diese Weise kann eine unerwünschte Durchhärtung großer Teile des Zwickelbereichs vermieden werden. Damit bleibt die erwünschte Duktilität in den von den Bohrungsoberflächen weiter entfernten Volumenteilen der Gehäusewand auch im Zwickelbereich im jeweils erforderlichen Maß erhalten.

Je nach Art des für das Zylindergehäuse eingesetzten Stahlwerkstoffs ist zur Durchführung der induktiven Härtung eine Mindestabkühlgeschwindigkeit nach der Erwärmung auf Härtetemperatur erforderlich. Bei sogenannten Lufthärtem reicht eine normale Abkühlung an ruhender Luft völlig aus, zumal Wärme aus den oberflächennahen Bereichen in die nicht induktiv erwärmten Volumenelemente der Gehäusewand des Zylindergehäuses abfließen kann. Bei Werkstoffen, die eine schroffere Abkühlung erfordern, wird vorteilhaft in einem kurzen axialen Abstand hinter dem Induktor eine Kühleinrichtung zur Beschleunigung der Abkühlung der induktiv erhitzten Bereiche durch die Brillen bohrung hindurchgeführt. Auf diese Weise wird die Innenoberfläche über einen kurzen Teil ihrer axialen Länge jeweils erwärmt und unmittelbar danach sukzessive abgeschreckt. Das Härten erfolgt hierbei also in einem räumlich kontinuierlich fortschreitenden Verfahren. Je nach gewünschter Größe der Abkühlgeschwindigkeit können flüssige (z.B. Wasser) oder gasförmige (z.B. Luft) Kühlmittel für die beschleunigte Abkühlung verwendet werden.

Die Verminderung des spezifischen Wärmeenergieeintrags im Nahbereich der beiden Zwickel der Brillenbohrung lässt sich auf unterschiedliche Weise bewirken. In einer Ausführungsform sieht die Erfindung vor, den Induktor im Nahbereich der beiden Zwickel mit einem gegenüber dem übrigen Bereich der Innenkontur der Brillenbohrung deutlich vergrößerten Abstand von der Innenoberfläche durch die Gehäusebohrungen zu führen. Je größer der Abstand des induktors von der Gehäuseoberfläche ist, umso weniger Wärmeenergie kann durch den Induktor in den jeweiligen Oberflächenbereich eingetragen werden.

Eine andere Möglichkeit besteht darin, die elektrischen Betriebsparameter des Induktors bezogen auf den Umfang der Innenoberfläche bereichsweise zu ändern. In diesem Zusammenhang sind insbesondere die Verfahrensparameter Stromstärke und Frequenz des Induktorstroms zu nennen. Durch die Wahl der Frequenz lässt sich in an sich bekannter Weise die Eindringtiefe verändem, während die Größe des Induktorstroms für die einbringbare Wärmeleistung maßgeblich ist. Daher lässt sich der Wärmeeintrag auch durch die Wahl der Anschaltzeit des Induktors während seiner Hindurchführung durch die Brillenbohrung beeinflussen. Vorzugsweise wird ein Induktor eingesetzt, der über die Länge seines Umfangs elektrisch unabhängig voneinander steuerbare Abschnitte aufweist. Es kann also vorgesehen sein, den oder die in unmittelbarer Nähe der Zwickelbereiche gelegenen Induktorabschnitte beispielsweise zeitlich getaktet anzusteuem, so dass sie nicht während der gesamten Behandlungszeit ständig in Betrieb sind. Sie können aber auch mit konstanter, aber gegenüber den von den Zwickeln weiter entfernten Bereichen verminderter elektrischer Leistung betrieben werden.

Selbstverständlich ist es auch möglich, neben einer Beeinflussung der Betriebsparameter zusätzlich auch die Verfahrensweise einzusetzen, bei der der Abstand des Induktors zur Innenoberfläche der Brillenbohrung über seinen Umfang gezielt ungleich eingestellt wird.

Mit besonderem Vorteil lässt sich das erfindungsgemäße Verfahren an Zylindergehäusen ausführen, die aus einem vergleichsweise kostengünstigen metallischen Werkstoff hergestellt sind und deren Innenoberfläche mit einem hochwertigen härtbaren Werkstoff plattiert worden ist, so dass es sich hierbei um einen Verbundwerkstoff handelt. Dabei kann die Erwärmung auch indirekt über den Grundwerkstoff erfolgen, wenn zur Plattierung ein unmagnetischer Werkstoff verwendet wird. Dieser wird aufgebracht, bevor die mechanische Bearbeitung der Brillenbohrung beendet ist. Die Oberfläche der Plattierung wird also ebenfalls noch mechanisch bearbeitet, bevor die Härtung erfolgt.

Eine erfindungsgemäße Vorrichtung zur induktiven Härtung der Innenoberfläche einer Brillenbohrung in einem Zylindergehäuse aus Stahl für einen Schneckenextruder, die insbesondere zur Durchführung des Härtens im Rahmen eines erfindungsgemäßen Herstellverfahrens eingesetzt wird, weist einen elektrischen Induktor auf, dessen äußere Form annähernd einer Verkleinerung der Innenkontur der Brillenbohrung entspricht, wobei der Induktor in der Weise ausgelegt ist, dass im Nahbereich der beiden Zwickel der Brillenbohrung bezogen auf den zugeordneten Längenabschnitt am Umfang des Induktors jeweils deutlich weniger Energie zur Erwärmung der Innenoberfläche abgegeben wird als in den von den Zwickeln entfernteren Bereichen der Innenoberfläche.

Vorzugsweise wird ein Induktor als zusammenhängender elektrischer Leiter, der etwa die Außenkontur einer "8" aufweist aus einem elektrisch leitenden Rohr gebogen, vorzugsweise aus einem Kupferrohr. Zur Kühlung des Induktors kann durch dieses Rohr ein Kühlmittel geführt werden. Die Form des Induktors ist so gestaltet, dass die oberen und unteren Bereiche der "8" jeweils kreisförmig gebogen sind, während sich mit zunehmender Annäherung an den Mittelbereich der "8", der dem Zwicketbereich der Brillenbohrung entspricht, jeweils ein Bereich mit zunehmend kleinerem Krümmungsradius anschließt Im eigentlichen Mittelbereich der "8" ist jeweils ein Gegenbogen vorgesehen, um die Bereiche mit dem kleineren Krümmungsradius paarweise miteinander zu verbinden. Durch die Veränderung des Krümmungsradius wird erreicht, dass die jeweiligen Teilbereiche am Umfang des Induktors beim Hindurchführen durch die Brillenbohrung des Zylindergehäuses einen unterschiedlichen Abstand von der Innenoberfläche aufweisen.

Alternativ oder zusätzlich kann der Induktor auch in mehrere elektrisch unabhängig voneinander steuerbare Abschnitte aufgeteilt sein. In diesem Fall ist der Induktor also nicht als zusammenhängender elektrischer Leiter ausgeführt, sondern aus elektrisch gegeneinander isolierten Teilabschnitten aufgebaut, die allerdings in ihrer Summe wiederum die an eine "8" angenäherte Außenkontur aufweisen können. Es kann aber auch vorgesehen sein, den Induktor praktisch aus zwei separaten Teilen aufzubauen, die in ihrer äußeren Gestalt den beiden Teilen der Brillenbohrung, also den jeweils sich überlappenden Gehäusebohrungen entsprechen. Dabei ist wiederum vorgesehen, dass die zwickelnahen Bereiche des Induktors von der Innenoberfläche einen größeren Abstand aufweisen als die von den Zwickeln weiter entfernten Bereiche. Alternativ oder zusätzlich kann auch hier eine Unterteilung der beiden Teile des Induktors in unabhängig voneinander elektrisch steuerbare Abschnitte gewählt werden.

Vorzugsweise wird in einem kurzen axialen Abstand hinter dem Induktor eine Kühlvorrichtung angeordnet, durch die die von dem Induktor beim Hindurchführen durch die Brillenbohrung erwärmten Oberflächenbereiche der Brillenbohrung beschleunigt abkühlbar sind. Diese Kühlvorrichtung ist vorzugsweise aus einem ähnlich einer "8" gebogenen, umlaufenden Verteilerrohr gebildet, dessen Kontur in ihrer Größe jeweils an die zu behandelnde Brillenbohrung angepasst ist. Dieses Verteilerrohr weist eine Vielzahl von radial nach außen und schräg gegen die vorgesehene Bewegungsrichtung der Vorrichtung angestellte Düsen für ein fließfähiges Kühlmittel, insbesondere für ein Kühlgas auf.

Nachfolgend wird die Erfindung anhand der in den Figuren schematisch dargestellten Ausführungsbeispiele näher erläutert. Es zeigen:
- Fig. 1 - Fig. 4: Unterschiedliche Ausführungsformen erfindungsgemäßer Induktoren in einem Zylindergehäuse,
- Fig. 5: eine Kühlvorrichtung in einem Zylindergehäuse und
- Fig. 6: einen vergrößerten Ausschnitt aus der Gehäusewand eines Zylindergehäuses im Bereich des Zwickels.

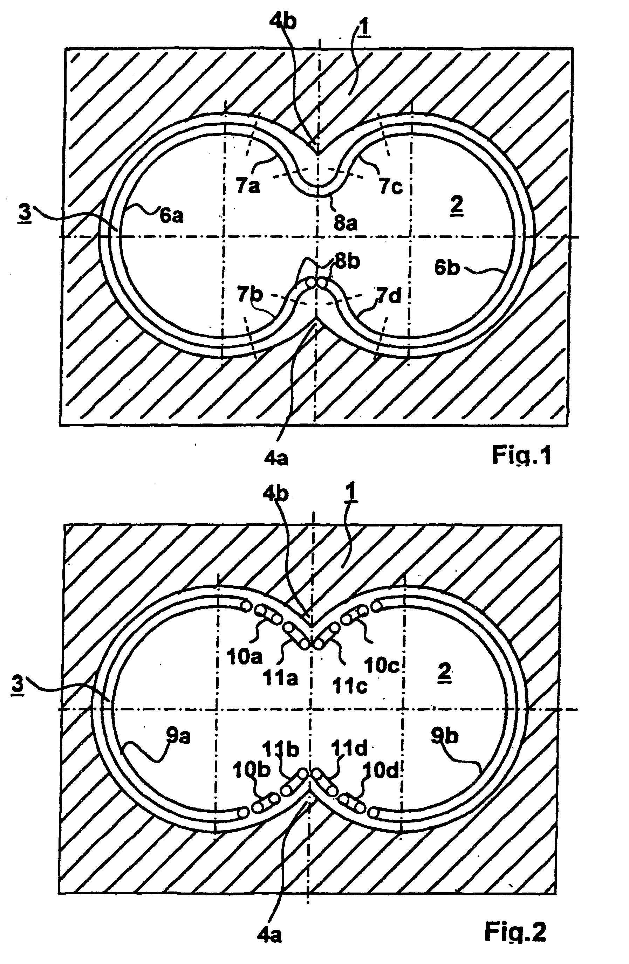

Die Figuren 1-4 zeigen jeweils in einem Querschnitt ein Zylindergehäuse 1 mit einer aus zwei sich teilweise überlappenden Gehäusebohrungen gebildeten Brillenbohrung 2. Das Zylindergehäuse 1 ist aus einem Block eines härtbaren Stahls durch zerspanende Fertigungsverfahren hergestellt worden. Im Überlappungsbereich der beiden Gehäusebohrungen ist die Gehäusewand in Form der beiden Zwickel 4 a, 4 b gestaltet. Ein solcher Zwickel ist in der Figur 6 als Teilausschnitt vergrößert dargestellt. Die Innenoberfläche des Zylindergehäuses 1 soll so gehärtet werden, dass die gehärtete Schicht 17 nur eine sehr begrenzte Tiefe von z.B. 0,5 - 2 mm aufweist. Hierdurch soll vermieden werden, dass die Zwickel 4 a, 4 b durchgehärtet werden und so ihre Duktilität im Inneren verlieren.

Im Inneren der Brillenbohrung 2 ist in Figur 1 ein elektrischer Induktor 3 angeordnet, der im Wesentlichen in Form einer liegenden "8" als zusammenhängender elektrischer Leiter beispielsweise aus einem Kupferrohr gebogen ist. Der Induktor 3 ist aus mehreren Teilstücken mit unterschiedlicher Krümmung zusammengesetzt. Die beiden Teilstücke 6 a und 6 b weisen jeweils einen konstanten Krümmungsradius auf, der gewährleistet, dass der Abstand dieser Teilstücke von der Innenoberfläche der Brillenbohrung 2 jeweils konstant ist. In unmittelbarem Anschluss an diese Teilstücke 6 a und 6 b sind die Teilstücke 7 a - 7 d vorgesehen, die in Richtung auf den Mittelbereich der "8" einen zunehmend kleineren Krümmungsradius aufweisen, so dass in diesen Bereichen sich der Abstand des Induktors von der Innenoberfläche der Brillenbohrung entsprechend vergrößert. Zur Verbindung der Teilstücke 7 a, 7 c bzw. 7 b, 7 d miteinander sind die beiden Gegenbögen 8 a und 8 b vorgesehen. Dabei ist der Gegenbogen 8 b im Prinzip geteilt ausgeführt, da an ihm die beiden elektrischen Anschlüsse für die Einleitung des Induktorstroms angeordnet sind. Diese Anschlüsse sind durch zwei kleine Kreise angedeutet.

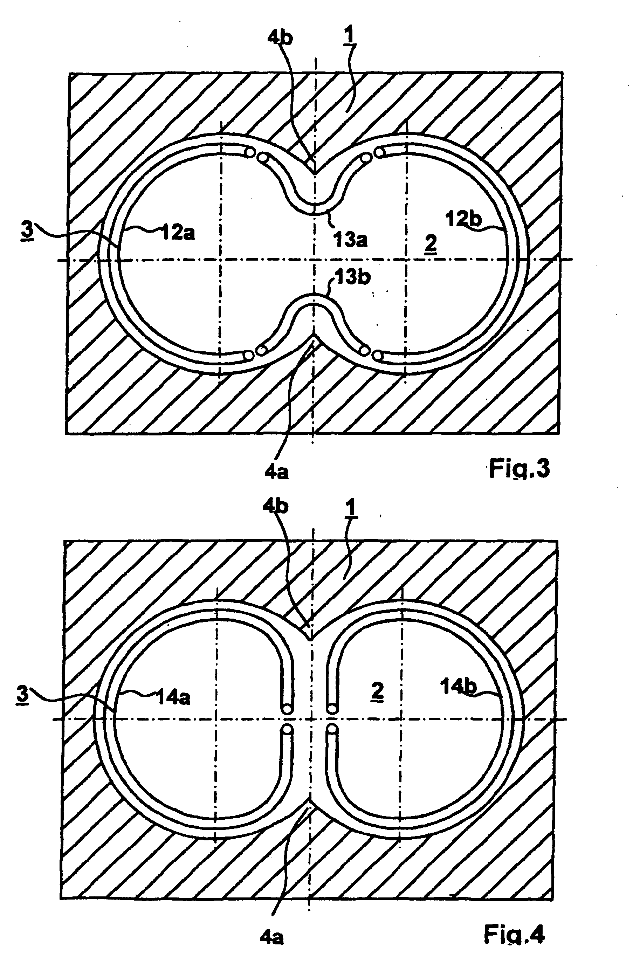

In Figur 2 ist eine andere Ausführungsform des Induktors 3 dargestellt, bei der einzelne Teilstücke im Nahbereich der beiden Zwickel 4 a, 4 b elektrisch unabhängig voneinander steuerbar sind, also separate induktorstromanschlüsse aufweisen. Insgesamt bleibt bei diesem Induktor 3 der Abstand zur Innenoberfläche der Brillenbohrung 2 über den gesamten Umfang praktisch konstant. Der Induktor 3 besteht im vorliegenden Fall jeweils aus zwei kreisförmig gebogenen Teilstücken 9 a, 9 b, deren Umfang größer als bei einem Halbkreis ist. An jedem Ende der beiden Teilstücke 9 a, 9 b schließen sich nacheinander jeweils zwei kürzere Teilstücke 10 a, 11 a bzw. 10 b, 11 b bzw. 10 c, 11 c bzw. 10 d, 11 d des Induktors an. Die Teilstücke 10 a -10 d können, da sie symmetrisch in Bezug auf die innenkontur der Brillenbohrung 2 angeordnet sind, mit den gleichen elektrischen Parametern betrieben werden, also an die gleiche Stromquelle angeschlossen werden. Entsprechendesgilt für die Teilstücke 11 a - 11 d. Diese können im Vergleich zu den Teilstücken 9 a, 9 b zur Verminderung des spezifischen Wärmeenergieeintrags im Bereich der Zwickel 4 a, 4 b insbesondere mit vermindertem Induktorstrom und/oder zeitlich getaktet betrieben werden.

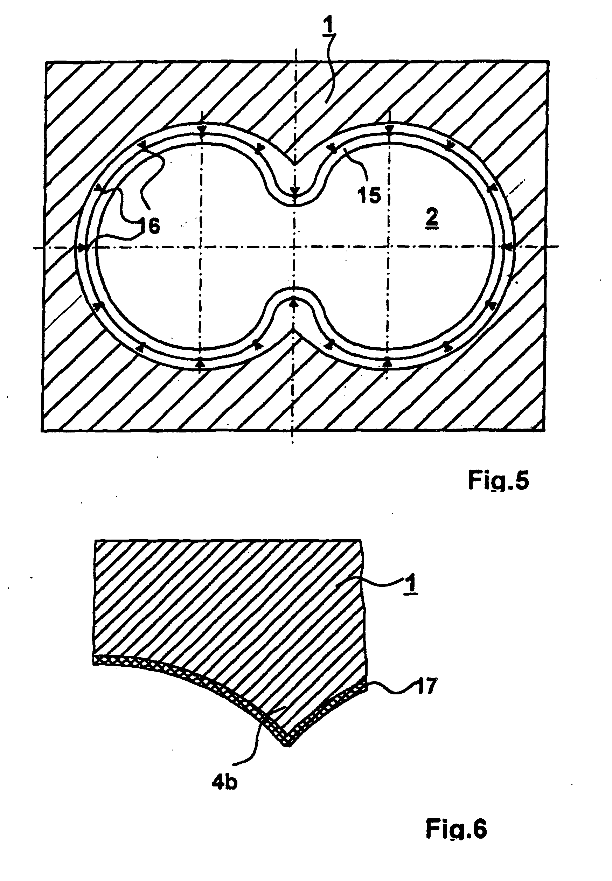

In Figur 3 ist eine Variante des Induktors 3 dargestellt, bei der insgesamt vier unabhängig voneinander elektrisch steuerbare Abschnitte 12 a, 12 b, 13 a, 13 b vorgesehen sind. Die beiden Abschnitte 12 a, 12 b weisen einen konstanten Krümmungsradius auf, während die in der Nähe der beiden Zwickel 4 a, 4 b angeordneten Induktorteilstücke 13 a, 13 b so gekrümmt sind, dass ihr Abstand von der Innenoberfläche mit zunehmender Annäherung an den Spitzenbereich des jeweiligen Zwickels 4 a bzw. 4 b größer wird. Zusätzlich ist vorgesehen, dass die beiden Teilstücke 13 a, 13 b mit gegenüber den beiden Teilstücken 12 a, 12 b verminderter elektrischer Leistung betrieben werden.

In Figur 4 ist eine Variante des Induktors 3 wiedergegeben, bei der dieser aus zwei Teilstücken 14 a, 14 b besteht, die jeweils mit gleichen elektrischen Parametern betrieben werden, also vorzugsweise an dieselbe elektrische Stromquelle angeschlossen werden. Ähnlich wie in Figur 1 und Figur 3 weist der Induktor 3 mit zunehmender Annäherung an die beiden Zwickelbereiche 4 a, 4 b einen größer werdenden Abstand von der Innenoberfläche der Brillenbohrung 2 auf.

In Figur 5 ist eine Kühlvorrichtung 15 innerhalb einer Brillenbohrung 2 eines Zylindergehäuses 1 dargestellt, die in axialem Abstand hinter dem hier nicht dargestellten Induktor angeordnet ist und zusammen mit dem Induktor durch die Brillenbohrung 2 in audater Richtung hindurchgeführt wird. Diese Kühlvorrichtung 15 ist in Form eines umlaufenden Verteiterrohres ausgebildet, das im Wesentlichen in Form einer "8" gebogen ist und insoweit an die Kontur der Brillenbohrung 2 angepasst ist. Das Verteilerrohr ist mit einer nicht dargestellten Zufuhrleitung für ein Kühlmedium sowie an seinem Umfang mit zahlreichen radial nach außen gerichteten Düsen 16 versehen, durch die ein gasförmiges oder flüssiges Kühlmedium austreten kann. Die Düsen 16 sind bezogen auf die Bewegungsrichtung des Induktors während des Härtevorgangs schräg nach hinten gegen die Bewegungsrichtung angestellt, damit nicht die noch aufzuheizenden Bereiche der Innenoberfläche gekühlt werden, sondern lediglich die bereits auf Härtetemperatur gebrachten Oberflächenbereiche.

Mit der vorliegenden Erfindung lassen sich Zylindergehäuse von Doppelschneckenextrudern sehr viel kostengünstiger mit einer weitgehend gleichbleibend dicken Härteschicht im Bereich der Innenoberfläche versehen, als dies bisher der Fall war, da eine aufwendige Glühbehandlung des gesamten Zylindergehäuses in einem Ofen unterbleiben kann. Dabei wird nicht nur eine erhebliche Energieeinsparung erzielt, sondern es wird auch eine drastische Verkürzung der Behandlungsdauer erreicht. Wesentlich ist, dass mit der erfindungsgemäßen Verfahrensweise und durch den Einsatz eines erfindungsgemäßen Induktors eine unerwünschte Durchhärtung der Zwickeibereiche unterbleibt.

## Patentansprüche

1. Verfahren zur Herstellung eines Zylindergehäuses eines Doppelschneckenextruders, dessen Schnecken miteinander kämmen, mit verschleißfester Innenoberfläche aus einem Stahlblock durch Einbringung zweier durchgehender und sich teilweise überlappender Bohrungen (Brillenbohrung) in den Stahlblock und anschließendes Härten der Innenoberfläche der Brillenbohrung,
**dadurch gekennzeichnet,**
**dass** das Härten als induktives Härten mit im Wesentlichen gleichbleibender Eindringtiefe erfolgt, indem ein elektrischer Induktor mit einer der Innenkontur der Brillenbohrung annähernd entsprechenden, verkleinerten Form von einem Ende der Brillenbohrung zu dessen anderem Ende hindurchgeführt wird, wobei ein Induktor eingesetzt wird, der darauf ausgelegt ist, dass im Nahbereich der beiden Zwickel der Brillenbohrung bezogen auf den zugeordneten Längenabschnitt am Umfang des Induktors jeweils deutlich weniger Energie zur Erwärmung der Innenoberfläche der Brillenbohrung abgegeben wird als in den von den Zwickeln entfernteren Bereichen der Innenkontur.

2. Verfahren nach Anspruch 1,
**dadurch gekennzeichnet,**
**dass** in axialem Abstand hinter dem Induktor eine Kuhteinnchtung zur beschleunigten Abkühlung der induktiv erhitzten Bereiche durch die Brillenbohrung geführt wird.

3. Verfahren nach Anspruch 2,
**dadurch gekennzeichnet,**
**dass** ein flüssiges oder gasförmiges Kühlmittel für die beschleunigte Abkühlung verwendet wird.

4. Verfahren nach einem der Ansprüche 1 - 3,
**dadurch gekennzeichnet,**
**dass** der Induktor im Nahbereich der beiden Zwickel mit einem gegenüber dem übrigen Bereich der Innenkontur deutlich vergrößerten Abstand von der Innenoberfläche durch die Brillenbohrung geführt wird.

5. Verfahren nach einem der Ansprüche 1 - 4,
**dadurch gekennzeichnet,**
**dass** ein Induktor mit über die Länge seines Umfangs elektrisch unabhängig voneinander steuerbaren Abschnitten verwendet wird.

6. Verfahren nach einem der Ansprüche 1 - 5,
**dadurch gekennzeichnet,**
**dass** die Innenoberfläche der Brillenbohrung vor dem letzten Arbeitsgang der mechanischen Bearbeitung des Stahlblocks mit einem härtbaren Plattierungswerkstoff versehen wird.

7. Vorrichtung zur induktiven Härtung der Innenoberfläche einer Brillenbohrung (2) in einem Zylindergehäuse (1) aus Stahl für einen Doppelschneckenextruder, zur Durchführung des Verfahrens nach Anspruch 1, mit einem elektrischen Induktor (3), dessen äußere Form annähernd einer Verkleinerung der Innenkontur der Brillenbohrung (2) entspricht, wobei der Induktor (3) in der Weise ausgebildet ist, dass im Nahbereich der beiden Zwickel (4 a, b) der Brillenbohrung (2) bezogen auf den zugeordneten Längenabschnitt am Umfang des Induktors (3) jeweils deutlich weniger Energie zur Erwärmung der Innenoberfläche abgebbar ist als in den von den Zwickeln (4 a, b) entfernteren Bereichen der Innenoberfläche.

8. Vorrichtung nach Anspruch 7,
**dadurch gekennzeichnet,**
**dass** der Induktor (3) aus einem von einem Kühlmittel durchströmbaren elektrisch leitenden Rohr, als zusammenhängender, etwa die Außenkontur einer "8" aufweisender, elektrischer Leiter (5) gebogen ist, wobei die oberen und unteren Bereiche (6 a, b) der "8" jeweils kreisförmig gebogen sind, während sich mit zunehmender Annäherung an den Mittelbereich der "8" jeweils ein Bereich (7 a - d) mit zunehmend kleinerem Krümmungsradius anschließt und im Mittelbereich der "8" jeweils ein Gegenbogen (8 a, b) zur Verbindung mit den Bereichen (7 a - d) mit kleinerem Krümmungsradius vorgesehen ist.

9. Vorrichtung nach Anspruch 7 oder 8,
**dadurch gekennzeichnet,**
**dass** der Induktor (3) in mehrere elektrisch unabhängig voneinander steuerbare Abschnitte (9 a - 11 d; 12 a - 13 b; 14 a, b) aufgeteilt ist.

10. Vorrichtung nach einem der Ansprüche 7 - 9,
**dadurch gekennzeichnet,**
**dass** in axialem Abstand hinter dem Induktor (3) eine Kühlvorrichtung (15) vorgesehen ist, durch die die von dem Induktor (3) beim Hindurchführen durch eine Brillenbohrung (2) erhitzten Oberflächenbereiche der Brillenbohrung (2) beschleunigt abkühlbar sind.

11. Vorrichtung nach Anspruch 10,
**dadurch gekennzeichnet,**
**dass** die Kühlvorrichtung (15) aus einem ähnlich einer "8" gebogenen, umlaufenden Verteilerrohr gebildet ist, dessen Kontur an die jeweils zu behandelnde Brillenbohrung (2) angepasst ist und weiches eine Vielzahl von radial nach außen und schräg gegen die vorgesehene Bewegungsrichtung der Vorrichtung angestettte Düsen (16) für ein fließfähiges Kühlmittel, insbesondere ein Kühlgas aufweist.

12. Vorrichtung nach Anspruch 8,
**dadurch gekennzeichnet,**
**dass** das elektrisch leitende Rohr ein Kupferrohr ist.

13. Vorrichtung nach Anspruch 11,
**dadurch gekennzeichnet,**
**dass** das Kühlmittel ein Kühlgas ist.

## Claims

1. Method for manufacturing a cylindrical casing for a double screw extruder whose screws mesh with each other, with an abrasion-resistant inner surface, made from a block of steel by putting two holes that pass right through and that partly overlap each other (spectacle hole) into the steel block, and subsequently hardening the inner surface of the spectacle hole,
**characterised in that**
the hardening process is in the form of inductive hardening with an essentially consistent penetration depth, **in that** an electrical inductor with a shape that is approximately the same as the inner contour of the spectacle hole but reduced in size is passed from one end of the spectacle hole to the other, an inductor being used that is designed so that, in the immediate vicinity of the two narrow parts of the spectacle hole in relation to the corresponding lengthwise section on the perimeter of the inductor, in each case far less energy is released for heating the inner surface of the spectacle hole than in the areas of the inner contour that are further away from the narrow parts.

2. Method as in claim 1,
**characterised in that**
at an axial distance behind the inductor, a cooling appliance is passed through the spectacle hole for the accelerated cooling of the inductively heated areas.

3. Method as in claim 2,
**characterised in that**
a liquid or gaseous coolant is used for the accelerated cooling process.

4. Method as in one of claims 1 to 3,
**characterised in that**
the inductor is passed through the spectacle hole at a far greater distance from the inner surface in the immediate vicinity of the two narrow parts than in the remaining area of the inner surface.

5. Method as in one of claims 1 to 4,
**characterised in that**
an inductor is used that has, along the length of its perimeter, sections that can be electrically controlled independently of each other.

6. Method as in one of claims 1 to 5,
**characterised in that**
prior to the final operation of the mechanical treatment of the steel block, the inner surface of the spectacle hole is provided with a hardenable plating material.

7. Device for the inductive hardening of the inner surface of a spectacle hole (2) in a cylindrical casing (1) made of steel for a double screw extruder, for the purpose of carrying out the method as in claim 1, with an electrical inductor (3), the external shape of which is approximately the same as a reduced form of the inner contour of the spectacle hole (2), the inductor (3) being shaped in such a way that, in the immediate vicinity of the two narrow parts (4 a, b) of the spectacle hole (2) in relation to the corresponding lengthwise section on the perimeter of the inductor (3), in each case far less energy is released for heating the inner surface than in the areas of the inner surface that are further away from the narrow parts (4 a, b).

8. Device as in claim 7,
**characterised in that**
the inductor (3) is curved from an electrically conductive tube through which can be passed a coolant, to form a continuous electrical conductor (5) with the approximate external contour of a figure 8, the top and bottom areas (6 a, b) of the figure 8 each being curved in a circular shape, while with increasing proximity to the central area of the figure 8, there adjoins in each case an area (7 a - d) with an increasingly smaller radius of curvature, and in the central area of the figure 8 there is in each case a counter-curve (8 a, b) for the purpose of joining up with the areas (7 a - d) that have a smaller radius of curvature.

9. Device as in claim 7 or 8,
**characterised in that**
the inductor is divided into a number of sections (9 a - 11 d; 12 a - 13 b; 14 a, b) which can be electrically controlled independently of each other.

10. Device as in one of claims 7 to 9,
**characterised in that**
at an axial distance behind the inductor (3) there is a cooling device (15), by means of which the surface areas of a specacle hole (2) heated by the inductor (3) during its passage through the spectacle hole (2) can be rapidly cooled.

11. Device as in claim 10,
**characterised in that**
the cooling device (15) is made up of a distributing tube curved like a figure 8 and running right round, the outer contour of which is adapted in each case to the spectacle hole (2) that is to be treated, and which has a large number of nozzles (16) for a free-flowing coolant, in particular a coolant gas, which nozzles are set radially outwards and at an angle to the intended direction of movement of the device.

12. Device as in claim 8,
**characterised in that**
the electrically conductive tube is a copper tube.

13. Device as in claim 11,
**characterised in that**
the coolant is a coolant gas.

## Revendications

1. Procédé pour la fabrication d'un boîtier cylindrique d'extrudeuse à deux vis, dont les vis s'engrènent l'une dans l'autre, comportant une surface intérieure résistant à l'usure, à partir d'un lingot d'acier en pratiquant deux perçages traversants se chevauchant partiellement (trous chevauchants) dans le lingot d'acier et en trempant ensuite la surface intérieure des trous chevauchants,
**caractérisé en ce que** la trempe est réalisée par induction avec une profondeur de pénétration essentiellement constante du fait qu'un inducteur électrique ayant une forme réduite correspondant approximativement au contour intérieur des trous chevauchants est guidé d'une extrémité des trous chevauchants à leur autre extrémité, l'inducteur employé étant dimensionné de telle façon que, dans la zone proche des deux goussets des trous chevauchants rapportée à la partie associée de la circonférence de l'inducteur, il est délivré beaucoup moins d'énergie pour le réchauffement de la surface intérieure des trous chevauchants que dans les zones du contour intérieur plus éloignées des goussets.

2. Procédé selon la revendication 1,
**caractérisé en ce que**, à distance axiale derrière l'inducteur, un dispositif de refroidissement est guidé à travers les trous chevauchants pour le refroidissement accéléré des zones chauffées par induction.

3. Procédé selon la revendication 2,
**caractérisé en ce qu'**un agent réfrigérant liquide ou gazeux est utilisé pour le refroidissement accéléré.

4. Procédé selon l'une des revendications 1 à 3,
**caractérisé en ce que**, dans la zone proche des deux goussets, l'inducteur est guidé à travers les trous chevauchants à une distance de la surface intérieure nettement plus grande que dans le restant du contour intérieur.

5. Procédé selon l'une des revendications 1 à 4,
**caractérisé en ce que** l'on utilise un inducteur ayant sur la longueur de sa circonférence des parties pouvant être commandées électriquement indépendamment les unes des autres.

6. Procédé selon l'une des revendications 1 à 5,
**caractérisé en ce que**, avant la dernière opération de l'usinage mécanique du lingot d'acier, la surface intérieure des trous chevauchants est pourvue d'une matière de placage pouvant être trempée.

7. Dispositif destiné à la trempe par induction de la surface intérieure de trous chevauchants (2) dans un boîtier cylindrique (1) d'extrudeuse à deux vis, pour la mise en oeuvre du procédé selon la revendication 1, comportant un inducteur électrique (3) dont la forme extérieure correspond approximativement à une réduction du contour intérieur des trous chevauchants (2), l'inducteur (3) étant réalisé de telle façon que, dans la zone proche des deux goussets (4a, b) des trous chevauchants (2) rapportée à la partie associée de la circonférence de l'inducteur (3), il peut être délivré nettement moins d'énergie pour le réchauffement de la surface intérieure que dans les zones de la surface intérieure plus éloignées des goussets (4a, b).

8. Dispositif selon la revendication 7,
**caractérisé en ce que** l'inducteur (3) est cintré à partir d'un tube électro-conducteur pouvant être traversé par un agent réfrigérant, sous forme de conducteur électrique (5) continu présentant approximativement le contour extérieur d'un « 8 », les zones supérieure et inférieure (6a, b) du « 8 » étant courbées chacune en forme de cercle, tandis qu'à mesure que l'on se rapproche de la zone centrale du « 8 », le rayon de courbure d'une zone (7a - d) contiguë diminue et une courbe inversée (8a, b) étant prévue dans la zone centrale du « 8 » pour la liaison avec les zones (7a - d) à rayon de courbure inférieur.

9. Dispositif selon la revendication 7 ou 8,
**caractérisé en ce que** l'inducteur (3) est divisé en plusieurs parties (9a - 11d ; 12a - 13b ; 14a, b) pouvant être commandées électriquement indépendamment les unes des autres.

10. Dispositif selon l'une des revendications 7 à 9,
**caractérisé en ce que**, à distance axiale derrière l'inducteur (3), il est prévu un dispositif de refroidissement (15) grâce auquel les zones de surface des trous chevauchants (2) chauffées par l'inducteur (3) lors de son passage à travers les trous chevauchants (2) peuvent être refroidies de manière accélérée.

11. Dispositif selon la revendication 10,
**caractérisé en ce que** le dispositif de refroidissement (15) est constitué d'un tube de distribution circulant courbé de manière semblable à un « 8 », dont le contour est adapté aux trous chevauchants (2) à traiter et lequel présente une pluralité de buses (16) pour un agent réfrigérant fluide, notamment un gaz réfrigérant, placées dans le sens radial vers l'extérieur et de manière oblique à l'encontre du sens de déplacement prévu du dispositif.

12. Dispositif selon la revendication 8,
**caractérisé en ce que** le tube électro-conducteur est un tube en cuivre.

13. Dispositif selon la revendication 11,
**caractérisé en ce que** l'agent réfrigérant est un gaz réfrigérant.
